(19) Europäisches Patentamt
European Patent Office
Office européen des brevets

(11) EP 0 937 126 B1

(12) EUROPÄISCHE PATENTSCHRIFT

(45) Veröffentlichungstag und Bekanntmachung des Hinweises auf die Patenterteilung:
**19.12.2001 Patentblatt 2001/51**

(21) Anmeldenummer: **97950033.7**

(22) Anmeldetag: **28.10.1997**

(51) Int Cl.[7]: **C11D 3/00**, C11D 3/37

(86) Internationale Anmeldenummer:
**PCT/EP97/05939**

(87) Internationale Veröffentlichungsnummer:
**WO 98/21301 (22.05.1998 Gazette 1998/20)**

# (54) VERWENDUNG VON QUATERNIERTEN VINYLIMIDAZOL-EINHEITEN ENTHALTENDEN POLYMERISATEN ALS FARBFIXIERENDEN UND FARBÜBERTRAGUNGSINHIBIERENDEN ZUSATZ ZU WÄSCHENACHBEHANDLUNGSMITTELN UND ZU WASCHMITTELN

USE OF QUATERNIZED POLYMERIZATES CONTAINING UNITS OF VINYL IMIDAZOL AS A COLOUR FIXING AND COLOUR TRANSFER INHIBITING ADDITIVE TO DETERGENT POST-TREATMENT AGENTS AND DETERGENTS

UTILISATION DE POLYMERISATS CONTENANT DES UNITES VINYLIMIDAZOL QUATERNARISEES COMME ADDITIF FIXANT LES COULEURS ET EMPECHANT LEUR TRANSFERT POUR PRODUITS DE BLANCHISSAGE DE POST-TRAITEMENT ET POUR PRODUITS DE LAVAGE

(84) Benannte Vertragsstaaten:
**DE ES FR GB IT NL SE**

(30) Priorität: **11.11.1996 DE 19646437**

(43) Veröffentlichungstag der Anmeldung:
**25.08.1999 Patentblatt 1999/34**

(73) Patentinhaber: **BASF AKTIENGESELLSCHAFT**
**67056 Ludwigshafen (DE)**

(72) Erfinder:
- **BÖCKH, Dieter**
  **D-67117 Limburgerhof (DE)**
- **JÄGER, Hans-Ulrich**
  **D-67434 Neustadt (DE)**
- **LUX, Jürgen, Alfred**
  **D-67150 Niederkirchen (DE)**
- **STEIN, Stefan**
  **D-55291 Saulheim (DE)**
- **DETERING, Jürgen**
  **D-67117 Limburgerhof (DE)**
- **SCHADE, Christian**
  **D-67061 Ludwigshafen (DE)**

(56) Entgegenhaltungen:
**EP-A- 0 309 908**
**EP-A- 0 462 806**
**EP-A- 0 812 949**
**WO-A-94/10281**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von Polymerisaten, die mindestens 5 Mol-% quaternierte, gegebenenfalls substituierte Vinylimidazol-Einheiten enthalten, als farbfixierenden Zusatz zu Wäschenachbehandlungsmitteln und zu Waschmitteln.

Beim Waschen von gefärbten Textilien wird der Farbstoff teilweise von den gefärbten Textilien abgelöst und aus der Waschflotte auf andere Gewebe übertragen. Wenn man beispielsweise weiße Wäsche mit farbigen Textilien gemeinsam wäscht, wird die weiße Wäsche angeschmutzt. Um einen Übergang des abgelösten Textilfarbstoffs aus der Waschflotte auf das Waschgut zu verhindern, wurden sogenannte Color-Waschmittel entwickelt, die polymere Farbübertragungsinhibitoren enthalten. Dabei handelt es sich beispielsweise um Homo- und Copolymerisate von Vinylpyrrolidon und Vinylimidazol, vgl. DE-B-22 32 353 und DE-A-28 14 287.

Aus der WO-A-94/10281 ist bekannt, Copolymerisate aus

(a) 1-Vinylpyrrolidon und/oder 1-Vinylimidazol und

(b) stickstoffhaltigen, basischen ethylenisch ungesättigten Monomeren in Form der freien Basen, der Salze oder in quaternierter Form

als Zusatz zu Waschmitteln zur Inhibierung der Farbstoffübertragung während des Waschvorgangs zu verwenden.

Polymerisate von Alkyl-1-vinylimidazolen und Verfahren zu ihrer Herstellung durch radikalisch initiierte Polymerisation von Alkyl-l-vinylimidazolen gegebenenfalls in Gegenwart von anderen Monomeren in Wasser oder $C_1$- bis $C_4$-Alkoholen sind aus der WO-A-95/15345 bekannt. Die so erhältlichen Polymerisate werden als Zusatz zu Waschmitteln zur Inhibierung der Farbstoffübertragung während des Waschvorgangs verwendet.

Aus der EP-A-0 462 806 ist die Verwendung von kationischen Farbstoffixiermitteln in Wäschenachbehandlungsbädern zusammen mit Weichspülern bekannt. Die Nachbehandlung der Wäsche erfolgt in den üblicherweise im Haushalt verwendeten Waschmaschinen bei Temperaturen unterhalb von 40°C. Die Farbstoffixiermittel können gemäß den Angaben in der Anmeldung auch in nichtionischen Waschmitteln eingesetzt werden. Die kationischen Fixiermittel verlangsamen die Ablösung des Farbstoffs vom gefärbten Textilgut während des Behandlungsprozesses.

Der vorliegenden Erfindung liegt die Aufgabe zugrunde, andere Mittel zur Unterdrückung der Farbstoffablösung und der Farbstoffübertragung auf andere Textilien während des Waschens und während der Nachbehandlung von gefärbten Textilien zur Verfügung zu stellen.

Die Aufgabe wird erfindungsgemäß gelöst mit der Verwendung von Polymerisaten, die mindestens 5 Mol-% quaternierte 1-Vinylimidazol-Einheiten der Formel

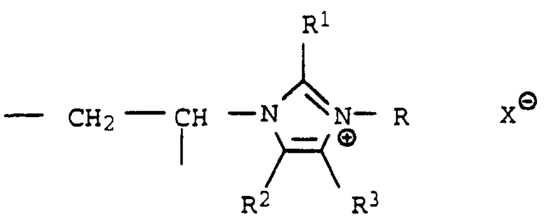

(I)

enthalten, in der

| | |
|---|---|
| R = | $C_1$- bis $C_{25}$-Alkyl, $C_5$- bis $C_{10}$-Cycloalkyl oder Benzyl |
| $R^1$,$R^2$,$R^3$ | gleich oder verschieden sind und H, $CH_3$ und $C_2H_5$ bedeuten und |
| $X^{\ominus}$ | ein Anion ist, |

als farbfixierenden zu Wäschenachbehandlungsmitteln und zu Waschmitteln.

Die erfindungsgemäß zu verwendenden Polymerisate enthalten meistens mindestens 10 Mol-% quaternierte 1-Vinylimidazol-Einheiten der Formel I und haben eine Molmasse von 5000 bis 1 Mio. Bevorzugt werden solche Polymerisate eingesetzt, die 20 bis 100 Mol-% quaternierte 1-Vinylimidazol-Einheiten der Formel I enthalten und eine Molmasse von 10000 bis 500000 haben (bestimmt durch Lichtstreuung).

Die erfindungsgemäß einzusetzenden Polymerisate sind erhältlich durch radikalisch initiierte Polymerisation von quaternären 1-Vinylimidazolen der Formel II

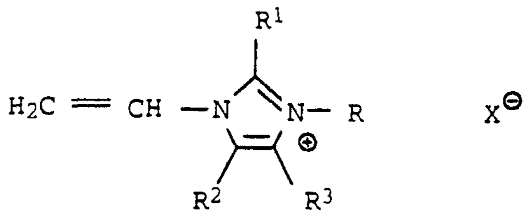

(II),

in der

R = $C_1$- bis $C_{25}$-Alkyl, $C_5$- bis $C_{10}$-Cycloalkyl oder Benzyl,

$R^1$,$R^2$,$R^3$ gleich oder verschieden sind und H, $CH_3$ und $C_2H_5$ bedeuten und

$X^{\ominus}$ ein Anion ist, vorzugsweise Cl-, Br-, J-, $CH_3OSO_3$- oder $C_2H_5OSO_3$-

gegebenenfalls in Gegenwart von anderen monoethylenisch ungesättigten Monomeren.

Beispiele für solche Monomere sind 1-Vinyl-2-methyl-3-benzyl-imidazoliumchlorid, 1-Vinyl-2,4-dimethyl-3-benzyl-imidazoliumchlorid, 1-Vinyl-2,4,5-trimethyl-3-benzyl-imidazoliumbromid, 1-Vinyl-2,4,5-trimethyl-3-ethyl-imidazoliumchlorid, 1-Vinyl-2-ethyl-3-benzyl-imidazoliumchlorid, 1-Vinyl-4,5-diethyl-3-methylimidazoliumchlorid und 1-Vinyl-2,4,5-triethyl-3-benzyl-imidazoliumchlorid.

Die erfindungsgemäß zu verwendenden Polymerisate sind auch dadurch erhältlich, daß man Polymerisate, die 1-Vinylimidazol-Einheiten der Formel

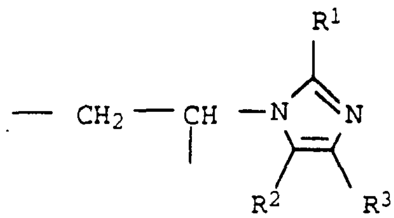

(III)

enthalten, in der $R^1$, $R^2$, $R^3$ gleich oder verschieden sind und H, $CH_3$ und $C_2H_5$ bedeuten, mit $C_1$- bis $C_{25}$-Alkylierungsmitteln quaternisiert. Polymere dieser Art werden beispielsweise in WO-A-94/10281 und WO-A-94/14861 beschrieben.

Geeignete Quaternisierungsmittel sind beispielsweise Alkylhalogenide wie die vorzugsweise verwendeten $C_1$- bis $C_{25}$-Alkylchloride oder Alkylbromide, $C_5$- bis $C_{10}$-Cycloalkylhalogenide oder Benzylchlorid bzw. Benzylbromid. Geeignete Alkylierungsmittel sind beispielsweise Methylchlorid, Ethylchlorid, Methylbromid, Ethylbromid, Propylchlorid, n-Propylbromid, Isopropylchlorid, Butylchlorid, Hexylchlorid, Cyclohexylchlorid, Octylchlorid, Dodedecylchlorid und Stearylchlorid. Vorzugsweise verwendet man als Quaternisierungsmittel $C_1$- bis $C_{12}$-Alkylchloride oder Alkylbromide sowie Benzylchlorid oder Benzylbromid.

Weitere geeignete Alkylierungsmittel sind Dialkylsulfate und O-Alkylsulfonate. Beispiele für geeignete Dialkylsulfate sind Dimethylsulfat und Diethylsulfat. Beispiele für geeignete O-Alkylsulfonate sind O-Methyl-methylsulfonat und O-Methyltoluolsulfonat. Dimethylsulfat und Diethylsulfat sind bevorzugte Alkylierungsmittel.

Beispiele für quaternisierte 1-Vinylimidazole der Formel II sind 3-Methyl-1-vinylimidazoliumchlorid, 3-Benzyl-1-vinylimidazoliumchlorid, 3-Ethyl-1-vinylimidazoliumsulfat, 3-n-Dodecyl-1-vinylimidazoliumbromid und 3-n-Octadecyl-1-vinylimidazoliumchlorid.

Die bevorzugt eingesetzten Polymerisate enthalten Einheiten der Formel I, in der $R^1$, $R^2$, $R^3$ = H und R = Methyl, Ethyl oder Benzyl ist. Sie enthalten beispielsweise

(a) 25 bis 100 Mol-% quaternäre Vinylimidazole der Formel II,

(b) 0 bis 75 mol-% 1-Vinylpyrrolidon, Vinyloxazolidon, N-Vinylcaprolactam, N-Vinylamide von $C_1$- bis $C_8$-Carbonsäuren, Acrylnitril, Vinylester von $C_1$- bis $C_{10}$-Carbonsäuren, Acrylsäureester und Methacrylsäureester von $C_1$- bis $C_{20}$-Alkoholen oder Mischungen der genannten Monomeren und

(c) 0 bis 30 Mol-% andere monoethylenisch ungesättigte Monomere

einpolymerisiert.

Besonders bevorzugt sind solche Copolymerisate, die

(a) 40 bis 100 Mol-% quaternäre Vinylimidazole der Formel II und

(b) 0 bis 60 Mol-% 1-Vinylpyrrolidon, N-Vinylformamid, N-Vinylcaprolactam, Vinylacetat, Vinylpropionat, Methylacrylat oder Mischungen der genannten Monomeren einpolymerisiert enthalten. Falls die Monomeren der Komponente (b) in den Polymerisaten enthalten sind, beträgt ihr Anteil vorzugsweise 20 bis 50 Mol-%.

(c) Geeignete Monomere (c) sind z.B. monoethylenisch ungesättigte Carbonsäuren, wie Acrylsäure, Methacrylsäure, Furmarsäure, Maleinsäure, Maleinsäureanhydrid, Itaconsäure, Itaconsäureanhydrid. Weitere geeignete Comonomere sind Hydroxyethylacrylat, Hydroxyethylmethacrylat, Hydroxypropylacrylat, Hydroxypropylmethacrylat, Hydroxybutylacrylat, Hydroxybutylmethacrylat, Phenoxyethylacrylat, Dimethylaminoethylacrylat, Dimethylaminoethylmethacrylat, Diethylaminoethyl(meth)acrylat, Methoxyethylacrylat.

Weitere geeignete Monomere sind: (Meth)acrylamid, N-Methylol(meth)acrylamid, N-substituierte (Meth)acrylamide, wie N-Methyl(meth)acrylamid, N-t-Butylacrylamid, Diallyldimethylammoniumchlorid, Diallyldiethylammoniumchlorid, Dimethylaminopropylmethacrylamid, Diethylaminopropylmethacrylamid, Styrol, Methylstyrol, Vinylalkylether, wie Vinylmethylether, Vinylethylether, Vinylpropylether, Styrolsulfonat, Vinylsulfonat, 2-Sulfoethylmethacrylat und 2-Acrylamido-2-methylpropansulfonsäure.

Die quaternierten Vinylimidazol-Einheiten der Formel I enthaltenden Polymerisate werden beispielsweise in Mengen von 0,05 bis 2,5, vorzugsweise 0,1 bis 1,5 Gew.-% in Waschmitteln eingesetzt, die weniger als 4 Gew.-% eines Aniontensids enthalten. Für die Anwendung in aniontensidhaltigen Waschmittelformulierungen verwendet man bevorzugt Polymerisate, die Einheiten der Formel I enthalten, in denen $R^1$, $R^2$, $R^3$ = H und R = $C_1$- bis $C_{22}$-Alkyl oder Benzyl und X ein Anion ist. Die erfindungsgemäß zu verwendenden quaternierte 1-Vinylimidazol-Einheiten der Formel I enthaltenden Polymerisate werden bevorzugt in anionentensidfreien Waschmitteln eingesetzt. Solche Waschmittelformulierungen enthalten beispielsweise

(i) 1 bis 50 Gew.-% mindestens eines nichtionischen Tensids,
(ii) 0 bis 4,0 Gew.-% vorzugsweise bis 2,5 % eines anionischen Tensids und
(iii) 0,05 bis 2,5 Gew.-% mindestens eines Polymerisats, das mindestens 5 Mol-% quaternierte 1-Vinylimidazol-Einheiten der Formel I

enthält.

Geeignete nichtionische Tenside (i) sind beispielsweise alkoxylierte $C_8$- bis $C_{22}$-Alkohole. Die Alkoxylierung kann mit Ethylenoxid, Propylenoxid und/oder Butylenoxid durchgeführt werden. Als Tenside einsetzbar sind hierbei sämtliche alkoxylierten Alkohole, die mindestens zwei Moleküle eines vorstehend genannten Alkylenoxids addiert enthalten. Bei den erwähnten Alkylenoxidaddukten kann es sich um Blockpolymerisate von Ethylenoxid, Propylenoxid und/oder Butylenoxid oder um Anlagerungsprodukte handeln, die die genannten Alkylenoxide in statistischer Verteilung enthalten. Die nichtionischen Tenside enthalten pro Mol Alkohol beispielsweise 2 bis 50, vorzugsweise 3 bis 20 Mol mindestens eines Alkylenoxids addiert. Vorzugsweise setzt man als Alkylenoxid Ethylenoxid ein. Die Alkohole leiten sich vorzugsweise von Verbindungen mit 10 bis 18 Kohlenstoffatomen ab. Hierbei kann es sich um natürliche oder um synthetische Alkohole handeln.

Eine weitere Klasse nichtionischer Tenside sind Alkylpolyglucoside mit 8 bis 22, vorzugsweise 10 bis 18 Kohlenstoffatomen in der Alkylkette. Diese Verbindungen enthalten beispielsweise 1 bis 20, vorzugsweise 1,1 bis 5 Glucosideinheiten.

Eine andere Klasse nichtionischer Tenside sind N-Alkylglucamide der allgemeinen Struktur I bzw. II

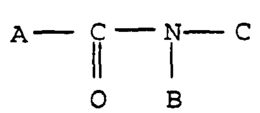 (I) 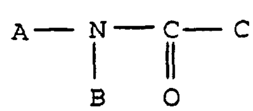 (II)

wobei A ein $C_6$- bis $C_{22}$-Alkyl, B ein H oder $C_1$- bis $C_4$-Alkyl und C ein Polyhydroxyalkyl-Rest mit 5 bis 12 C-Atomen und mindestens 3 Hydroxygruppen ist. Vorzugsweise steht A für $C_{10}$- bis $C_{18}$-Alkyl-, B für $CH_3$- und C für einen $C_5$ oder $C_6$-Rest. Beispielsweise erhält man derartige Verbindungen durch die Acylierung von reduzierend aminierten Zuckern mit Säurechloriden von $C_{10}$-$C_{18}$-Carbonsäuren. Die Waschmittelformulierungen enthalten vorzugsweise mit

3-12 Mol Ethylenoxid ethoxylierte $C_{10}$-$C_{18}$-Alkohole, besonders bevorzugt ethoxylierte Fettalkohole als nichtionische Tenside.

Weitere, bevorzugt in Betracht kommende Tenside sind die aus der WO-A-95/11225 bekannten endgruppenverschlossenen Fettsaureamidalkoxylate der allgemeinen Formel

$$R^1—CO—NH—(CH_2)_n—O—(AO)_x—R^2 \quad \text{(III)},$$

in der

- $R^1$ einen $C_5$- bis $C_{21}$-Alkyl- oder -Alkenylrest bezeichnet,
- $R^2$ eine $C_1$- bis $C_4$-Alkylgruppe bedeutet,
- A für $C_2$- bis $C_4$-Alkylen steht,
- n die Zahl 2 oder 3 bezeichnet und
- x einen Wert von 1 bis 6 hat.

Beispiele für solche Verbindungen sind die Umsetzungsprodukte von n-Butyltriglykolamin der Formel $H_2N-(CH_2-CH_2-O)_3-C_4H_9$ mit Dodecansäuremethylester oder die Reaktionsprodukte von Ethyltetraglykolamin der Formel $H_2N-(CH_2-CH_2-O)_4-C_2H_5$ mit einem handelsüblichen Gemisch von gesättigten $C_8$- bis $C_{18}$-Fettsäuremethylestern.

Die pulver- oder granulatförmigen Waschmittel können außerdem einen oder mehrere Builder enthalten. Als anorganische Buildersubstanzen eignen sich z.B. alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von Zeolithen sind geeignet, insbesondere Zeolith A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise beschrieben in EP-A-0 038 591, EP-A-0 021 491, EP-A-0 087 035, US-A-4 604 224, GB-A-2 013 259, EP-A-0 522 726, EP-A-0 384 070 und WO-A-94/24251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst AG). Die Silikate können in Form ihrer Alkali-, Erdalkali- oder Ammoniumsalze eingesetzt werden. Vorzugsweise werden Na-, Li-und Mg-Silikate eingesetzt.

Weitere geeignete anorganische Buildersubstanzen sind Carbonate und Hydrogencarbonate. Diese können in Form ihrer Alkali-, Erdalkali- oder Ammoniumsalze eingesetzt werden. Vorzugsweise werden Na-, Li- und Mg-Carbonate bzw. Hydrogencarbonate, insbesondere Natriumcarbonat und/oder Natriumhydrogencarbonat eingesetzt.

Die anorganischen Builder können in den Waschmitteln in Mengen von 0 bis 60 Gew.-% zusammen mit gegebenenfalls zu verwendenden organischen Cobuildern enthalten sein. Die anorganischen Builder können entweder allein oder in beliebigen Kombinationen miteinander in das Waschmittel eingearbeitet werden.

In pulver- oder granulatförmigen oder anderen festen Waschmittelformulierungen sind organische Cobuilder in Mengen von 0 bis 20 Gew.-%, vorzugsweise in Mengen von 1 bis 15 Gew.-% zusammen mit anorganischen Buildern enthalten. Die pulver- oder granulatförmigen Vollwaschmittel können außerdem sonstige übliche Bestandteile wie Bleichsysteme bestehend aus mindestens einem Bleichmittel, gegebenenfalls in Kombination mit einem Bleichaktivator und/oder einem Bleichkatalysator sowie andere übliche Bestandteile wie Soil-release Polymere, Vergrauungsinhibitoren, Enzyme, anorganische Stellmittel wie Natriumsulfat, Komplexbildner, optische Aufheller, Farbstoffe, Parfümöle, Schaumdämpfer, Korrosionsinhibitoren, Phosphate und/oder Phosphonate in den üblichen Mengen enthalten.

Die Waschmittel sind vorzugsweise frei von anionischen Tensiden, können sie jedoch als Komponente (ii) in Mengen bis zu 4 Gew.-%, vorzugsweise bis zu 2,5 Gew.-%, enthalten. Als anionische Tenside eigenen sich beispielsweise Fettalkoholsulfate von Fettalkoholen mit 8 bis 22 Kohlenstoffatomen, sulfatierte, ethoxylierte $C_8$- bis $C_{22}$-Alkohole bzw. deren wasserlösliche Alkalimetall- und Ammoniumsalze. Weitere geeignete anionische Tenside sind Alkylsulfonate wie $C_8$- bis $C_{24}$-Alkansulfonate, Seifen wie beispielsweise die Alkalimetallsalze von $C_8$- bis $C_{24}$-Carbonsäuren sowie N-Acylsarkosinate mit $C_8$- bis $C_{24}$-Acylresten. Außerdem eignen sich als anionische Tenside $C_9$- bis $C_{20}$-Linearalkylbenzolsulfonate (LAS). Die anionischen Tenside können auch beispielsweise in Form der Hydroxyethylammonium-, Di(hydroxyethyl)ammonium- und Tri(hydroxyethyl)ammoniumsalze eingesetzt werden. Falls die erfindungsgemäßen Waschmittel anionische Tenside enthalten, werden vorzugsweise Seifen, Acylsarkosinate oder sulfatierte ethoxylierte $C_8$-$C_{22}$-Alkohole eingesetzt.

Die Waschmittel enthalten erfindungsgemäß als Komponente (iii) 0,05 bis 2,5, vorzugsweise 0,1 bis 1,5 Gew.-% mindestens eines der oben beschriebenen quaternierten Polymerisate mit mindestens 5 Mol-% Einheiten der Formel I.

Die erfindungsgemäß zu verwendenden quaternierten Polymeren haben nicht nur eine farbübertragungsinhibierende Wirkung beim Waschen von gefärbten Textilien zusammen mit nicht gefärbten Textilien sondern besitzen überraschenderweise auch eine farbfixierende Wirkung. Dadurch kommt es während des Waschvorgangs zu keiner so starken Farbstoffablösung von gefärbten Textilien wie beim Einsatz anderer Farbübertragungsinhibitoren wie beispielsweise Polymerisate von N-Vinylpyrrolidon.

Mindestens 5 Mol-% quaternierte 1-Vinylimidazol-Einheiten der Formel I enthaltende Polymere haben in Wäschenachbehandlungs- und -pflegemitteln einen ausgeprägten farbfixierenden Effekt und wirken außerdem als Farbübertragungsinhibitor. Die quaternierte Vinylimidazol-Einheiten der Formel I enthaltenden Polymerisate werden daher vorteilhaft in Waschnachbehandlungsmitteln eingesetzt. Wäschenachbehandlungsmittel enthalten beispielsweise

(i) 1 bis 50 Gew.-% eines Weichspülers für Wäsche,
(ii) 1 bis 50 Gew.-% eines nichtionischen Tensids und
(iii) 0,1 bis 2,5 Gew.-% mindestens eine quaternierten 1-Vinylimidazol-Einheit der Formel I in einer Menge von mindestens 5 Mol-% enthaltenden Polymerisats.

Die Wäschenachbehandlungsmittel enthalten als Komponente (i) vorzugsweise 2,5 bis 30 Gew.-% eines Weichspülers für Wäsche. Geeignete Weichspüler sind beispielsweise quaternäre Ammoniumverbindungen, Polysiloxane und nichtionische Celluloseether, vgl. beispielsweise EP-A-0 239 910, EP-A-0 150 867 und EP-A-0 213 730. Weichspüler für Wäsche sind beispielsweise Dialkyldimethylammoniumchloride und Alkylimidazoliummethylsulfate.

Die Wäschenachbehandlungsmittel enthalten als Komponente (ii) beispielsweise 1 bis 50, vorzugsweise 2 bis 20 Gew.-% eines nichtionischen Tensids. Nichtionische Tenside wurden bei der Zusammensetzung der Waschmittel als Komponente (i) bereits beschrieben. Die dort genannten Verbindungen können ebenso in Wäschenachbehandlungsmitteln eingesetzt werden. Die Wäschenachbehandlungsmittel enthalten als Komponente (iii) 0,1 bis 2,5, vorzugsweise 0,2 bis 2,0 Gew.-% eines quaternären Polymerisats als farbfixierenden und farbübertragungsinhibierenden Zusatz.

Die erfindungsgemäß zu verwendenden Polymeren erreichen beispielsweise in aniontensidfreier Formulierung bereits bei Konzentration von 20 bis 100 ppm in der Waschflotte bzw. der Flotte des Wäschenachbehandlungsmittels ein Wirkungsmaximum. Eine weitere Steigerung der Einsatzmenge der Polymeren bringt meistens nur eine geringe weitere Erhöhung der Wirksamkeit.

Sofern aus dem Zusammenhang nichts anderes hervorgeht, bedeuten die Prozentangaben in den Beispielen Gew.-%. Die K-Werte wurden nach H. Fikentscher, Cellulose-Chemie, Band 13, 58-65 und 71-74 (1932) bei einer Temperatur von 25°C und einer Polymerkonzentration von 1 Gew.-% in 0,5 molarer wäßriger NaCl-Lösung bestimmt.

Folgende quaternäre Polymerisate wurden verwendet:

Polymer 1

Copolymerisat aus 1-Vinylimidazol und 1-Vinylpyrrolidon im Molverhältnis 55:45, das durch Umsetzung mit Dimethylsulfat zu einem Terpolymer mit Einheiten von 1-Vinylimidazol, 1-Vinyl-3-methylimidazoliniummethosulfat und 1-Vinylpyrrolidon im Molverhältnis 45:10:45 quaterniert wurde. Das quaternäre Polymer hatte einen K-Wert von 34,7.

Polymer 2

Copolymerisat aus 1-Vinylimidazol und 1-Vinylpyrrolidon im Molverhältnis 60:40, das durch Umsetzung mit Dimethylsulfat zu einem Terpolymer quaterniert wurde, das Einheiten von 1-Vinylimidazol, l-Vinyl-3-methylimidazoliummethosulfat und 1-Vinylpyrrolidon im Molverhältnis 40:20:40 quaterniert wurde. Das quaternierte Polymer hatte einen K-Wert von 34,8.

Polymer 3

Copolymerisat aus 1-Vinylimidazol und 1-Vinylpyrrolidon im Molverhältnis 55:45, das durch Umsetzung mit Dimethylsulfat und Benzylchlorid zu einem Polymer quaterniert wurde, das Einheiten von 1-Vinylimidazol, 1-Vinyl-3-methylvinylimidazoliumchlorid, 1-Vinyl-3-benzylimidazoliumchlorid und 1-Vinylpyrrolidon im Molverhältnis 45:5:5:45 enthielt. Das Polymer hatte einen K-Wert von 83,3.

Polymer 4

Homopolymerisat von 1-Vinylimidazol mit einem K-Wert von 23, das durch Umsetzung mit Benzylchlorid im Molverhältnis 1:1 zu Poly-(N-benzyl)vinylimidazoliumchlorid umgesetzt wurde.

Polymer 5

Copolymer aus 1-Vinylimidazol und 1-Vinylpyrrolidon im Molverhältnis 1:1 mit einem K-Wert von 17, das durch Umsetzung in wäßriger Lösung mit 1 Mol Benzylchlorid pro Mol 1-Vinylimidazol zu einem Copolymerisat quaterniert wurde, das Einheiten von N-Benzylvinylimidazoliumchlorid und 1-Vinylpyrrolidon im Molverhältnis 1:1 enthielt.

Beispiele

Verwendung in einem Weichspüler:

Die erfindungsgemäß zu verwendenden Polymere wurden zur Prüfung der farbablösungsvermindernden und farbübertragungsinhibierenden Wirkung einem handelsüblichen Wäscheweichspüler zugesetzt. Das gefärbte Gewebe wurde mit einer wäßrigen Lösung des Weichspülers bei 25°C vorgespült, mit Leitungswasser nachgespült, getrocknet und gebügelt. Anschließend wurden die vorbehandelten Farbgewebe zusammen mit weißen Prüfgeweben mit einem kommerziellen Waschmittel gewaschen. Die Farbstärke der weißen Prüfgewebe im Vergleich zur vorher gemessenen Farbstärke wurde bestimmt nach A. Kud, Seifen, Öle, Fette, Wachse 119, 590 bis 594 (1993). Die jeweiligen Farbstärken der Anfärbungen des weißen Gewebes wurden bestimmt und daraus die farbübertragungsinhibierende Wirkung der Polymeren bestimmt. Zur Prüfung des Farbverlustes des farbigen Prüfgewebes wurde die Behandlung mit Weichspüler, anschließende Wäsche und Trocknung 5 mal mit demselben Farbgewebe wiederholt. Aus der Farbstärke des Farbgewebes vor der ersten Wäsche und der Farbstärke nach der 5. Wäsche wurde der Farbverlust gemäß folgender Formel bestimmt:

$$\text{Farbverlust [\%]} = \frac{\text{Farbstärke}_{\text{(vor der Wäsche)}} - \text{Farbstärke}_{\text{(nach der Wäsche)}}}{\text{Farbstärke}_{\text{(vor der Wäsche)}}} * 100.$$

Prüfbedingungen:

| | |
|---|---|
| Apparatur | Launder-O-meter |
| Farbgewebe | 1,0 g gefärbte Baumwollgewebe, Färbungen mit Direkt Blau 71 (0,8 % Farbstoff auf dem Gewebe) |
| Weißgewebe | 2,5 g Baumwollgewebe |

Vorbehandlung

| | |
|---|---|
| Weichspüler | Softlan® (Hersteller Colgate Palmolive) Einsatzkonzentration der Polymeren im Weichspüler: 2,0 % Einsatzmenge Weichspüler: 1,75 g/l<br>Temperatur (Spülung): 30°C Spüldauer: 10 min |

Wäsche:

| | |
|---|---|
| Waschmittel | Ajax® (Hersteller Colgate-Palmolive) |
| Menge | 5,0 g/l |
| Flottenmenge | 250 g |
| Waschtemperatur | 40°C |
| Wasserhärte | 14,5 °dH |
| Ca/Mg-Verhältnis | 4,0:1,0 |
| Waschdauer | 30 min. |

Tabelle 1:

| Prüfergebnisse zur Farbübertragungsinhibierung und zur Minderung des Farbverlustes mit Direkt Rot 212 auf Baumwolle | | | | |
|---|---|---|---|---|
| Bsp. | Polymer | Menge im Weichspüler Softlan [%] | Farbverlust [%] | Farbübertragungsinhibierung [%] |
| 1 | Polymer 1 | 2 | 18,3 | 85,2 |
| 2 | Polymer 2 | 2 | 18,4 | 86,9 |
| 3 | Polymer 3 | 2 | 16,8 | 85,6 |
| Vgl. Beispiel | | | | |
| 1 | ohne | - | 25,1 | 0 |
| 2 | PVP[1)] | 2 | 25,1 | 48,5 |
| 3 | VI/VP[2)]-Copolymer | 2 | 26,3 | 76,0 |

1) PVP = Poly-N-vinylpyrrolidon

2) VI/VP = 1-Vinylimidazol/1-Vinylpyrrolidon

Die Ergebnisse mit den erfindungsgemäß zu verwendenden Polymeren zeigen, daß die Polymeren bei Zusatz zu einem kommerziellen Weichspüler eine bessere farbübertragungsinhibierende Wirkung zeigen als bei Zusatz von Polyvinylpyrrolidon der Molmasse 40000 oder VI/VP-Copolymer der Molmasse 10000. Darüber hinaus wird die Farbablösung von den gefärbten Geweben deutlich vermindert und dadurch ein Verblassen von farbigen Textilien bei der Wäsche deutlich reduziert.

Zur Prüfung der erfindungsgemäßen Polymeren in Waschmittelformulierungen wurde die farbübertragungsinhibierende und farbablösungsvermindernde Wirkung in verschiedenen Vollwaschmitteln und Colorwaschmitteln geprüft (Tabellen 2 und 3). In den beispielhaften Formulierungen zeigen die erfindungsgemäßen Polymeren eine deutliche Verringerung der Farbübertragung und eine deutlich geringere Farbablösung als bei Verwendung von marktüblichen Farbübertragungsinhibitoren wie PVP, VI/VP-Copolymeren oder Poly-4-vinylpyridin-N-oxid.

Tabelle 2

| | I | II | III | IV | V | VI | VII |
|---|---|---|---|---|---|---|---|
| Polymer 1 | 1,5 | | 1,0 | 0,5 | | 0,6 | 0,3 |
| Polymer 2 | | 1,0 | | | | | |
| Polymer 3 | | | | | 1,0 | | |
| AS/MS (70000) | 7,5 | | 5,0 | | 5,0 | | |
| AS/MS/VAc-Terpolymer (40000) | | | | | | 5,0 | |
| Na-Perborat-Monohydrat | 15 | 15 | | | 15 | | 7,5 |
| Na-Percarbonat | | | 18 | 15 | | 18 | |
| TAED | 4,0 | 3,8 | 5,0 | 5,0 | 2,9 | 4,2 | 2,0 |
| Na-Laurylsulfat | | | | 1,0 | | | |
| lineares Alkylbenzolsulfonat Na-Salz | | | 0,8 | | | | |
| sulfatiertes Fettalkoholethoxylat | | | | | 1,5 | | |
| handelsübliches Oleylsarkosinat in der Säureform | 3,1 | | | | | 2,0 | |
| Seife | | | 0,4 | 2,5 | 1,5 | | 2,4 |
| $C_{13}/C_{15}$-Oxoalkohol*3 EO | | 3,0 | | | | | |
| $C_{13}/C_{15}$-Oxoalkohol*7 EO | 7,5 | | 4,7 | 18,5 | 8,0 | 6,5 | |
| $C_{13}/C_{15}$-Oxoalkohol*10 EO | | 3,0 | | | | | |

Tabelle 2 (fortgesetzt)

| | I | II | III | IV | V | VI | VII |
|---|---|---|---|---|---|---|---|
| $C_{12}/C_{14}$-Fettalkohol*7 EO | | | | | | | 10,0 |
| Laurylalkohol*13 EO | | | | - | | 5,0 | |
| Zeolith A | 25 | 25 | 15 | | 30 | 15 | 35 |
| Zeolith P | | | | 40 | | | |
| SKS-6 | | | 14 | | | 15 | |
| Na-Disilikat | 2,5 | 3,9 | | 0,5 | 4,5 | | 1,5 |
| Mg-Silikat | 1,0 | | 0,8 | | 1,0 | 1,0 | 0,6 |
| Natriumsulfat | 2,0 | 2,5 | 15,2 | 2,0 | 1,5 | 5,5 | 3,4 |
| Natriumhydrogencarbonat | | | 9,0 | 6,5 | | | |
| Natriumcarbonat | 12,0 | 13,6 | | | 10,0 | 8,0 | 9,8 |
| Soil-release Polymer | | 0,4 | | | 0,5 | | |
| Polyethylenterephthalat/ oxyethylenterephthalat | 1,0 | | | | 0,5 | 0,8 | 1,0 |
| Carboxymethylcellulose | 0,6 | 1,3 | 0,6 | 1,0 | 0,6 | 0,6 | 0,5 |
| Dequest® 2046 (Phosphonat) | | | | 0,5 | | | |
| Zitronensäure | | 6,8 | 5,0 | | | 2,5 | 3,8 |
| Lipase | | | | | 1,0 | | |
| Protease | | 1,0 | | | 1,0 | 0,5 | 0,6 |
| Cellulase | | | | | | | 0,6 |
| Wasser | auf 100 | auf 100 | auf 100 | auf 100 | auf 100 | auf 100 | auf 100 |

Abkürzungen:

| | |
|---|---|
| TAED | Tetraacetylethylendiamin |
| SKS-6 | Schichtsilikat-Na-Salz (Hersteller Fa. Hoechst) |
| EO | Ethylenoxid |
| AS/MS (70000) | = Acrylsäure/Maleinsäure-Copolymer im Gewichtsverhältnis 70:30 Molmasse $M_w$ = 70.000 |
| AS/MS/VAc (40000) | = Acrylsäure/Maleinsäure/Vinylacetat-Terpolymere im Molverhältnis 40:10:50 mit Molmasse $M_w$ = 40.000 |
| Soil-release Polymer | handelsübliches Pfropfpolymerisat von Vinylacetat auf Polyethylenglykol |

In Tabelle 4 ist die Zusammensetzung von Colorwaschmitteln angegeben, die erfindungsgemäß zu verwendende kationische Kondensationsprodukte enthalten.

Tabelle 3

| | VII | VIII | IX | X | XI | XII |
|---|---|---|---|---|---|---|
| Polymer 1 | 1,0 | 1,0 | 0,5 | 1,0 | 0,5 | 0,3 |
| AS/MS (70000) | 6,0 | 4,0 | 3,5 | 2,0 | 2,5 | 8,5 |
| Na-Laurylsulfat | | | 1,0 | | | |
| lineares Alkylbenzolsulfonat Na-Salz | | | | | | 0,5 |
| sulfatiertes Fettalkoholethoxylat | | | | 1,5 | | |

Tabelle 3 (fortgesetzt)

| | VII | VIII | IX | X | XI | XII |
|---|---|---|---|---|---|---|
| handelsübliches Oleylsarkosinat in der Säureform | | | | | 2,0 | |
| Seife | 2,5 | | 1,0 | 1,5 | 1,5 | |
| $C_{13}/C_{15}$-Oxoalkohol*3 EO | | 10,0 | | | 1,5 | |
| $C_{13}/C_{15}$-Oxoalkohol*7 EO | 6,7 | | 16,0 | 13,5 | 14,0 | 7,5 |
| $C_{13}/C_{15}$-Oxoalkohol*10 EO | | 6,3 | | | | |
| Laurylalkohol*13 EO | | | | 2,0 | | 9,0 |
| Zeolith A | 28 | 55 | 35 | | 37 | 18 |
| Zeolith P | | | | 36 | | |
| SKS-6 | | | 12 | | | |
| Na-Disilikat | 4,5 | | | 0,5 | 4,5 | |
| Mg-Silikat | 1,0 | | 1,0 | | 1,0 | 1,0 |
| Natriumsulfat | 24 | 5,8 | 11,5 | 8,0 | 4,5 | 10,0 |
| Natriumhydrogencarbonat | | | 6,5 | 6,5 | | |
| Natriumcarbonat | 12,0 | 6,0 | | | 10,0 | 9,0 |
| Carboxymethylcellulose | 0,6 | 0,5 | 0,6 | 1,0 | 0,6 | 0,6 |
| Sokalan® HP 22 | 1,0 | | | | | 0,5 |
| Polyethylenterephthalat/oxyethylenterephthalat | | | 1,0 | 0,5 | | 0,5 |
| Natriumcitrat | 2,0 | 9,0 | | | | 2,5 |
| Protease | 0,5 | | | | | 1,0 |
| Cellulase | 1,0 | | 1,0 | | 0,8 | 1,0 |
| Wasser | auf 100 | auf 100 | auf 100 | auf 100 | auf 100 | auf 100 |

Abkürzungen vgl. Legende zu Tabelle 2

In den folgenden Beispielen wird die Wirkung der Polymeren 4 und 5 in einer aniontensidarmen Waschmittelzusammensetzung erläutert. Hierfür wurden folgende Prüfbedingungen gewählt:

| | |
|---|---|
| Apparatur | Launder-O-meter |
| Farbgewebe | 1,0 g gefärbte Baumwollgewebe, Färbung mit Direkt Blau 71 (Färbung mit 0,8 % Farbstoff) |
| Weißgewebe | 2,5 g Baumwollgewebe |

Waschmittelzusammensetzung in % (Waschmittel A)

| | |
|---|---|
| $C_{13/15}$-Oxoalkohol *7 EO | 15,0 |
| Zeolith A | 50,0 |
| Natriumcarbonat | 10,0 |
| Natriumcitrat | 9,0 |
| sulfatiertes $C_{12/14}$-Fettalkoholethoxylat *3 EO | 1,0 |
| handelsübliches Oleylsarkosinat in der Säureform | 2,0 |
| Polymerisat aus 70 % Acrylsäure und 30 % Maleinsäure, Na-Salz, Molmasse 70000 | 4,0 |
| Carboxymethylcellulose | 0,5 |
| Wasser | auf 100 |

Wäsche:

| | |
|---|---|
| Waschmittel | Waschmittel A |
| Menge | 5,0 g/l |
| Flottenmenge | 250 g |
| Wassertemperatur | 60°C |
| Wasserhärte | 14,5°dH |
| Ca/Mg-Verhältnis | 4,0:1,0 |
| Waschdauer | 30 min |

Tabelle 4

| Prüfergebnisse zur Farbübertragungsinhibierung und zur Minderung des Farbverlustes mit Direkt Blau 71 auf Baumwolle | | | | |
|---|---|---|---|---|
| Bsp. | Polymer | Menge im Waschmittel A [%] | Farbverlust [%] | Farbübertragungsinhibierung [%] |
| 4 | Polymer 4 | 1 | 16,2 | 99,6 |
| 5 | Polymer 5 | 1 | 12,7 | 98,2 |
| Vgl. | Beispiel | | | |
| 4 | ohne | - | 9,6 | 0 |
| 5 | VI/VP[1)] Copolymer | 1 | 20,9 | 99,3 |

1) VI/VP = 1-Vinylimidazol/1-Vinylpyrrolidon

Die Ergebnisse mit den erfindungsgemäß zu verwendenden Polymeren 4 und 5 zeigen, daß die Polymeren in dem aniontensidarmen Waschmittel A eine sehr gute farbübertragungsinhibierende Wirkung besitzen und darüber hinaus deutlich weniger farbablösend wirken als das nicht quaternierte VI/VP-Copolymer mit einer Molmasse von 10000.

**Patentansprüche**

1. Verwendung von Polymerisaten, die mindestens 5 Mol-% quaternierte 1-Vinylimidazol-Einheiten der Formel

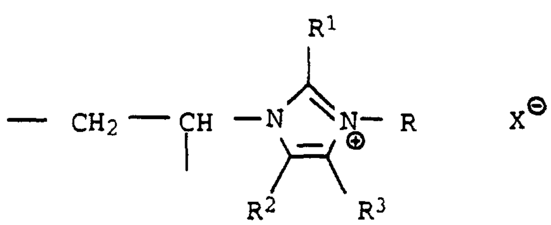

(I)

enthalten, in der

| | |
|---|---|
| R = | $C_1$- bis $C_{25}$-Alkyl, $C_5$- bis $C_{10}$-Cycloalkyl oder Benzyl |
| $R^1$,$R^2$,$R^3$ | gleich oder verschieden sind und H, $CH_3$ und $C_2H_5$ bedeuten und |
| $X^\ominus$ | ein Anion ist, |

als farbfixierenden Zusatz zu Wäschenachbehandlungsmitteln und zu Waschmitteln.

2. Verwendung nach Anspruch 1, **dadurch gekennzeichnet, daß** die Polymerisate mindestens 10 Mol-% quaternierte 1-Vinylimidazol-Einheiten der Formel I enthalten und Molmassen von 5000 bis 1 Million haben.

3. Verwendung nach Anspruch 1 oder 2, **dadurch gekennzeichnet, daß** die Polymerisate 20 bis 100 Mol-% quaternierte 1-Vinylimidazol-Einheiten der Formel I enthalten und Molmassen von 10000 bis 500000 haben.

4. Verwendung nach einem der Ansprüche 1 bis 3, **dadurch gekennzeichnet, daß** die Polymerisate Einheiten der Formel I enthalten, in der $R^1$, $R^2$, $R^3$ = H und R = Methyl, Ethyl oder Benzyl ist.

5. Verwendung nach einem der Ansprüche 1 bis 4, **dadurch gekennzeichnet, daß** man die quaternierte Vinylimidazol-Einheiten der Formel I enthaltenden Polymerisate in Mengen von 0,05 bis 2,5 Gew.-% in Waschmitteln einsetzt, die weniger als 4 Gew.-% eines Aniontensids enthalten.

6. Verwendung nach einem der Ansprüche 1 bis 4, **dadurch gekennzeichnet, daß** man die quaternierte Vinylimidazol-Einheiten der Formel I enthaltenden Polymerisate in anionentensidfreien Waschmitteln einsetzt.

7. Verwendung nach Anspruch 5 oder 6, **dadurch gekennzeichnet, daß** die Polymerisate Einheiten der Formel I enthalten, in denen $R^1$, $R^2$, $R^3$ = H und R = $C_1$- bis $C_{25}$-Alkyl oder Benzyl und X ein Anion ist.

8. Verwendung nach Anspruch 5, **dadurch gekennzeichnet, daß** die Polymerisate Einheiten der Formel I enthalten, in denen $R^1$, $R^2$, $R^3$ = H und R = $C_4$- bis $C_{22}$-Alkyl oder Benzyl und X ein Anion ist.

9. Verwendung nach einem der Ansprüche 1 bis 8, **dadurch gekennzeichnet, daß** man Polymerisate einsetzt, die erhältlich sind durch radikalisch initiierte Polymerisation von quaternären 1-Vinylimidazolen der Formel II

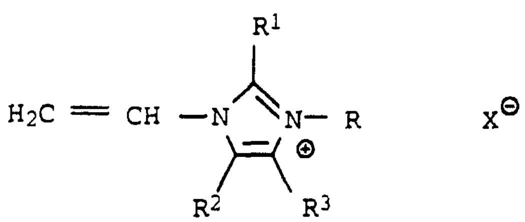 (II),

in der

R = $C_1$- bis $C_{25}$-Alkyl, $C_5$- bis $C_{10}$-Cycloalkyl oder Benzyl,

$R^1$,$R^2$,$R^3$ gleich oder verschieden sind und H, $CH_3$ und $C_2H_5$ bedeuten und

$X^{\ominus}$ ein Anion ist,

gegebenenfalls in Gegenwart von anderen monoethylenisch ungesättigten Monomeren oder durch Quaternisierung von Polymerisaten, die 1-Vinylimidazol-Einheiten der Formel

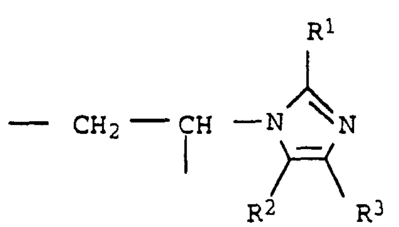 (III)

enthalten, in der $R^1$, $R^2$, $R^3$ gleich oder verschieden sind und H, $CH_3$ und $C_2H_5$ bedeuten, mit $C_1$- bis $C_{25}$-Alkylierungsmitteln.

10. Verwendung nach Anspruch 9, **dadurch gekennzeichnet, daß** die Polymerisate

(a) 25 bis 100 Mol-% quaternäre Vinylimidazole der Formel II,
(b) 0 bis 75 Mol-% 1-Vinylpyrrolidon, Vinyloxazolidon, N-Vinylcaprolactam, N-Vinylamide von $C_1$- bis $C_8$-Carbonsäuren, Vinylester von $C_1$- bis $C_{10}$-Carbonsäuren, Acrylsäureester und Methacrylsäureester von $C_1$- bis $C_{20}$-Alkoholen oder Mischungen der genannten Monomeren und
(c) 0 bis 30 Mol-% andere monoethylenisch ungesättigte Monomere

einpolymerisiert enthalten.

## Claims

**1.** The use of polymers which comprise at least 5 mol% of quaternized 1-vinylimidazole units of the formula

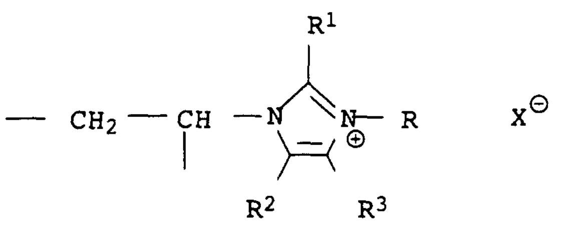

(I),

where

| | |
|---|---|
| R | is $C_1$-$C_{25}$-alkyl, $C_5$-$C_{10}$-cycloalkyl or benzyl |
| $R^1$,$R^2$,$R^3$ | are identical or different and are H, $CH_3$ and $C_2H_5$, and |
| $X^{\ominus}$ | is an anion, |

as color-fixing additive to laundry aftertreatment aids and to detergents.

**2.** The use as claimed in claim 1, wherein the polymers comprise at least 10 mol% of quaternized 1-vinylimidazole units of the formula I and have molecular weights of from 5000 to 1 million.

**3.** The use as claimed in claim 1, wherein the polymers comprise from 20 to 100 mol% of quaternized 1-vinylimidazole units of the formula I and have molecular weights of from 10000 to 500000.

**4.** The use as claimed in claim 1, wherein the polymers comprise units of the formula I where $R^1$, $R^2$, $R^3$ = H and R is methyl, ethyl or benzyl.

**5.** The use as claimed in claim 1, wherein the polymers comprising quaternized vinylimidazole units of the formula I are employed in amounts of from 0.05 to 2.5 % by weight in detergents which comprise less than 4 % by weight of an anionic surfactant.

**6.** The use as claimed in claim 1, wherein the polymers comprising quaternized vinylimidazole units of the formula I are employed in detergents containing no anionic surfactants.

**7.** The use as claimed in claim 1, wherein the polymers comprise units of the formula I where $R^1$, $R^2$, $R^3$ = H and R is $C_1$-$C_{25}$-alkyl or benzyl and X is an anion.

**8.** The use as claimed in claim 1, wherein the polymers comprise units of the formula I where $R^1$, $R^2$, $R^3$ = H and R is $C_4$-$C_{22}$-alkyl or benzyl and X is an anion.

**9.** The use as claimed in claim 1, wherein the polymers employed are obtainable by free-radical polymerization of quaternary 1-vinylimidazoles of the formula II

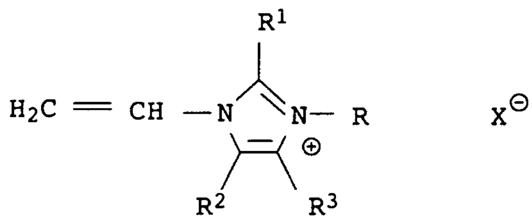

(II),

where

| | |
|---|---|
| R | is $C_1$-$C_{25}$-alkyl, $C_5$-$C_{10}$-cycloalkyl or benzyl, |
| $R^1$,$R^2$,$R^3$ | are identical or different and are H, $CH_3$ and $C_2H_5$, and |
| $X^{\ominus}$ | is an anion, |

in the presence or absence of other monoethylenically unsaturated monomers or by quaternization of polymers which comprise 1-vinylimidazole units of the formula

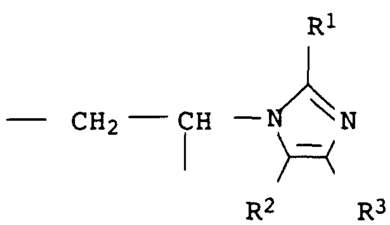

(III),

where $R^1$, $R^2$, $R^3$ are identical or different and are H, $CH_3$ and $C_2H_5$, with $C_1$-$C_{25}$-alkylating agents.

**10.** The use as claimed in claim 1, wherein the polymers comprise

(a) 25 to 100 mol% of quaternary vinylimidazoles of the formula II,

(b) 0 to 75 mol% of 1-vinylpyrrolidone, vinyloxazolidone, N-vinylcaprolactam, N-vinylamides of $C_1$-$C_8$-carboxylic acids, vinyl esters of $C_1$-$C_{10}$-carboxylic acids, acrylic esters and methacrylic esters of $C_1$-$C_{20}$-alcohols or mixtures of said monomers and

(c) 0 to 30 mol% of other monoethylenically unsaturated monomers

as copolymerized units.

**Revendications**

**1.** Utilisation, en tant qu'additif fixateur de couleurs à des produits de post-traitement du linge et des détergents, de polymères qui contiennent au moins 5 % en moles de motifs 1-vinylimidazole quaternisés de formule

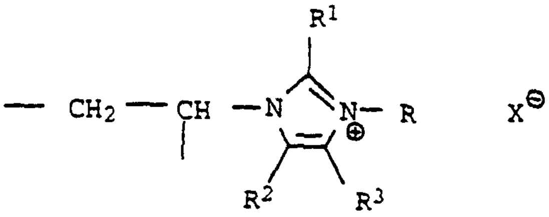

(I)

dans laquelle

R est un groupe alkyle en $C_5$ à $C_{25}$, cycloalkyle en $C_5$ à $C_{10}$ ou benzyle,
$R^1$, $R^2$ et $R^3$ sont identiques ou différents et représentent chacun H, $CH_3$ ou $C_2H_5$, et
$X^\ominus$ est un anion.

**2.** Utilisation selon la revendication 1, **caractérisée en ce que** les polymères contiennent au moins 10 % en moles de motifs 1-vinylimidazole quaternisés de formule I, et ont une masse moléculaire de 5000 à 1 million.

**3.** Utilisation selon la revendication 1 ou 2, **caractérisée en ce que** les polymères contiennent de 20 à 100 % en moles de motifs 1-vinylimidazole quaternisés et ont une masse moléculaire de 10 000 à 500 000.

**4.** Utilisation selon l'une des revendications 1 à 3, **caractérisée en ce que** les polymères contiennent des motifs de formule I dans laquelle $R^1$, $R^2$ et $R^3$ sont des atomes d'hydrogène et R est un groupe méthyle, éthyle ou benzyle.

**5.** Utilisation selon l'une des revendications 1 à 4, **caractérisée en ce que** l'on utilise les polymères contenant des motifs vinylimidazole quaternisés de formule I en des quantités de 0,05 à 2,5 % en poids dans des détergents qui contiennent moins de 4 % en poids d'un tensioactif anionique.

**6.** Utilisation selon l'une des revendications 1 à 4, **caractérisée en ce qu'**on utilise les polymères contenant des motifs vinylimidazole quaternisés de formule I dans des détergents ne contenant pas de tensioactifs anioniques.

**7.** Utilisation selon la revendication 5 ou 6, **caractérisée en ce que** les polymères contiennent des motifs de formule I dans laquelle $R^1$, $R^2$ et $R^3$ sont des atomes d'hydrogène et R est un groupe alkyle en $C_1$ à $C_{25}$ ou benzyle, et X est un anion.

**8.** Utilisation selon la revendication 5, **caractérisée en ce que** les polymères contiennent des motifs de formule I dans laquelle $R^1$, $R^2$ et $R^3$ sont des atomes d'hydrogène et R est un groupe alkyle en $C_4$ à $C_{22}$ ou benzyle, et X est un anion.

**9.** Utilisation selon l'une des revendications 1 à 8, **caractérisée en ce que** l'on utilise des polymères que l'on peut obtenir par polymérisation radicalaire de 1-vinylimidazoles quaternisés de formule II

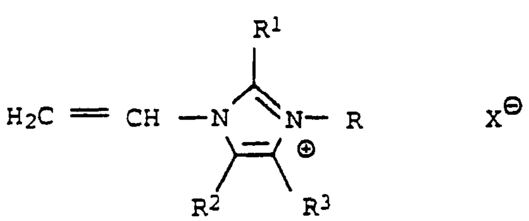

(II),

dans laquelle

R est un groupe alkyle en $C_5$ à $C_{25}$, cycloalkyle en $C_5$ à $C_{10}$ ou benzyle,
$R^1$, $R^2$ et $R^3$ sont identiques ou différents et représentent chacun H, $CH_3$ ou $C_2H_5$, et
$X^\ominus$ est un anion,

éventuellement en présence d'autres monomères à insaturation monoéthylénique, ou par quaternisation, avec des agents d'alkylation en $C_1$ à $C_{25}$, de polymères qui contiennent des motifs 1-vinylimidazole de formule

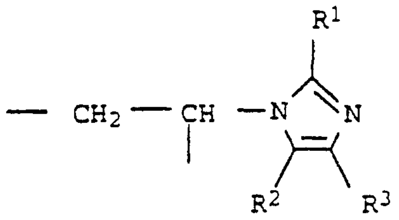

(III)

dans laquelle $R^1$, $R^2$ et $R^3$ sont identiques ou différents et représentent chacun H, $CH_3$ ou $C_2H_5$.

**10.** Utilisation selon la revendication 9, **caractérisée en ce que** les polymères contiennent, polymérisés

(a) de 25 à 100 % en moles de vinylimidazoles quaternisés de formule II,
(b) de 0 à 75 % en moles de 1-vinylpyrrolidone, de vinyloxazolidone, de N-vinylcaprolactame, de N-vinylamides d'acides carboxyliques en $C_1$ à $C_8$, d'esters vinyliques d'acides carboxyliques en $C_1$ à $C_{10}$, d'esters de l'acide acrylique et de l'acide méthacrylique d'alcools en $C_1$ à $C_{20}$, ou de mélanges des monomères mentionnés, et
(c) de 0 à 30 % en moles d'autres monomères à insaturation monoéthylénique.